Europäisches Patentamt

European Patent Office

Office européen des brevets

(11) Veröffentlichungsnummer: **0 073 270**
**A1**

## EUROPÄISCHE PATENTANMELDUNG

(21) Anmeldenummer: 81106853.5

(22) Anmeldetag: 02.09.81

(51) Int. Cl.³: **F 01 N 7/08, B 60 K 13/04**

(43) Veröffentlichungstag der Anmeldung: 09.03.83
Patentblatt 83/10

(71) Anmelder: **DEERE & COMPANY, 1 John Deere Road,
Moline Illinois 61265 (US)**

(72) Erfinder: **Adickes, Henning, Görres Strasse 68,
D-6900 Heidelberg (DE)**
Erfinder: **Karch, Rudi, Jäger Strasse 19,
D-6700 Ludwigshafen - Ruchheim (DE)**

(84) Benannte Vertragsstaaten: **AT BE CH DE FR GB IT LI LU
NL SE**

(74) Vertreter: **Schnabel, Hartmut, Dr.-Ing. et al, Am
Feldrain 13, D-6940 Weinheim (DE)**

(54) **Abgasanlage für Kraftfahrzeuge.**

(57) Die Erfindung betrifft eine Abgasanlage für Kraftfahrzeuge, insbesondere für Landfahrzeuge, die einen Abgaskrümmer (20), einen unter der Haube des Fahrzeuges anbringbaren Schalldämpfer (2) und ein Auspuffrohr (26) aufweist. Der Schalldämpfer (2) besitzt ein nach unten weisendes Endrohr (74), das mit dem nach hinten weisenden Auspuffrohr (26) lösbar verbunden ist. Das Endrohr (74) des Schalldämpfers (2) verläuft nach hinten geknickt. Das Endrohr (74) des Schalldämpfers (2) weist einen ringförmigen Wulst auf, an dem das trichterförmige Ende (52) des Auspuffrohres (26) anliegt.

Case 8233

DEERE & COMPANY
Moline
Illinois 61265/USA

ABGASANLAGE FÜR KRAFTFAHRZEUGE

Die Erfindung betrifft eine Abgasanlage für Kraftfahrzeuge, insbesondere für Landfahrzeuge, mit einem Abgaskrümmer, einem unter der Haube des Fahrzeuges anbringbaren Schalldämpfer und einem Auspuffrohr, wobei der Schalldämpfer ein rohrförmiges Gehäuse, einen dazu im wesentlichen parallelachsigen, in dieses hineinreichenden Einlaßstutzen und einen zum Einlaßstutzen parallelachsigen Auslaßstutzen aufweist.

Aus der DE-OS 29 30 775 ist ein Schalldämpfer für Abgase mit einem rohrförmigen Gehäuse, einem dazu im wesentlichen prallelachsigen, in diesen hineinreichenden Einlaßstutzen und einem zum Einlaßstutzen parallelachsigen Auslaßstutzen bekannt. Dieser Schalldämpfer ist unter der Haube eines Fahrzeuges anbringbar, wobei das Auspuffrohr senkrecht nach oben weist.

Ferner sind Abgasanlagen für Kraftfahrzeuge bekannt, bei denen der Abgaskrümmer mit dem Auspuffrohr verbunden ist und am Boden des Fahrzeuges ein Schalldämpfer angeordnet ist, durch den die Abgase nach hinten geleitet werden. Bei dieser bekannten Anordnung ist der Schalldämpfer am Boden des Fahrzeuges korrosionsfördernden Umwelteinflüssen ausgesetzt. Gleichzeitig besteht die Gefahr, daß er insbesondere bei Landfahrzeugen, z. B. durch

- 2 -

Pflugschollen, Steinschlag etc. beschädigt wird.

Der Erfindung liegt die Aufgabe zugrunde, eine Abgasanlage für Kraftfahrzeuge, insbesondere für Landfahrzeuge, vorzuschlagen, bei der einerseits der Schalldämpfer unter der Haube des Fahrzeuges anbringbar ist und bei der andererseits die Abgase durch das Auspuffrohr nach hinten geleitet werden.

Diese Aufgabe wird erfindungsgemäß dadurch gelöst, daß der Auslaßstutzen des Schalldämpfers an seinem inneren Ende im Gehäuse über einen Rohrkrümmer an ein Endrohr angeschlossen ist, das nach unten weist und mit dem nach hinten weisenden Auspuffrohr lösbar verbunden ist.

Diese erfindungsgemäße Abgasanlage weist einen Schalldämpfer auf, der unter der Haube des Fahrzeuges anbringbar ist. Hierdurch ist der Schalldämpfer im geschützten Bereich angebracht, wodurch er gegen korrosionsfördernde Umwelteinflüsse und gegen mechanische Beanspruchungen (Pflugschollen, Steinschlag etc.) geschützt ist. Gleichzeitig werden die Abgase vom Fahrzeug aus nach hinten geführt. Ein weiterer Vorteil der erfindungsgemäßen Abgasanlage besteht darin, daß die Bodenfreiheit durch den unter der Haube angebrachten Schalldämpfer nicht beeinträchtigt wird. Der bei der erfindungsgemäßen Abgasanlage verwendete Schalldämpfer ist ähnlich dem in der obengenannten Druckschrift DE-OS 29 30 775 beschriebenen Schalldämpfer. Gegenüber diesem bekannten Schalldämpfer weist das Endrohr des Schalldämpfers, der bei der erfindungsgemäßen Abgasanlage verwendet wird, nach unten.

Vorzugsweise verläuft das Endrohr des Schalldämpfers nach hinten geknickt. Gemäß dieser besonders bevorzugten Ausführungsform wird durch die Knickung des Endrohrs gewährleistet, daß eine einfache Führung der Auspuffgase durch das ebenfalls nach hinten weisende Auspuffrohr gewährleistet ist.

Vorteilhafterweise weist das Endrohr des Schalldämpfers einen ringförmigen Wulst auf, an dem das trichterförmige Ende des Auspuffrohres anliegt.

Vorzugsweise ist über dem ringförmigen Wulst des Schalldämpfers und dem trichterförmigen Ende des Auspuffrohres eine Rohrschelle angeordnet.

Gemäß diesen beiden besonders bevorzugten Ausführungsformen ist eine besonders einfache lösbare Verbindung des Auspuffrohres mit dem Endrohr des Schalldämpfers gewährleistet. Das trichterförmige Ende des Auspuffrohres wird über das Endrohr des Schalldämpfers geschoben, bis es an dem ringförmigen Wulst des Endrohres des Schalldämpfers anliegt. Anschließend kann eine an sich bekannte Rohrschelle befestigt werden, die die lösbare Verbindung des Auspuffrohres mit dem Endrohr herstellt.

Vorzugsweise ist der Schalldämpfer mittels eines an dem Einlaßstutzen angeordneten Flansches mit einem Abgasturbolader verbunden.

Anhand der Zeichnung ist ein Ausführungsbeispiel einer Abgasanlage nach der Erfindung erläutert.

Es zeigt
Figur 1 eine Gesamtansicht der Abgasanlage, ein-

- 4 -

gebaut in ein Fahrzeug,

Figur 2 eine Ansicht der erfindungsgemäßen Abgasanlage,

Figur 3 einen Längsschnitt des Schalldämpfers und

Figur 4 eine Ansicht des Schalldämpfers und eines Teiles des Auspuffrohres.

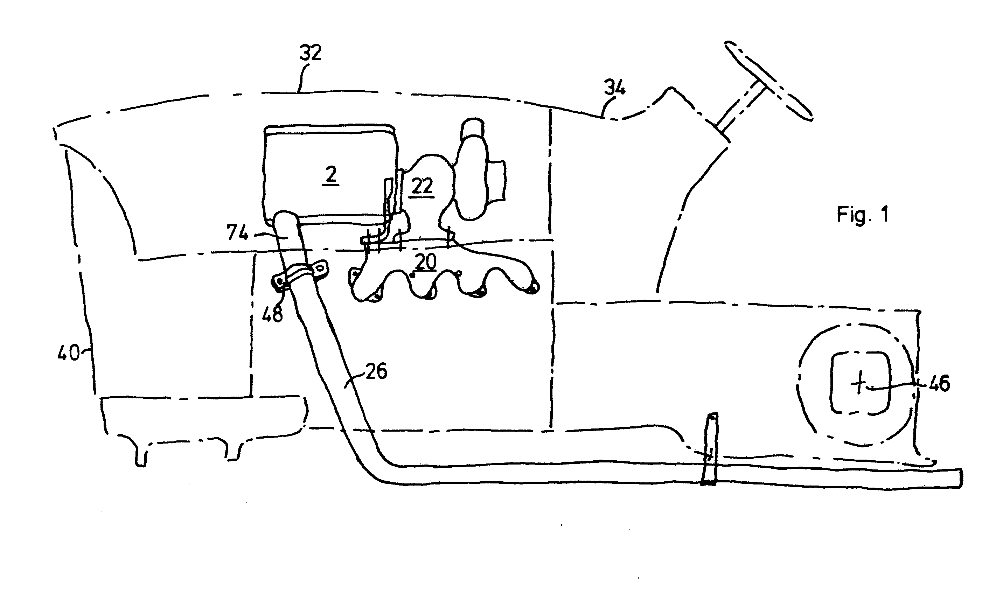

Gemäß Figur 1 ist unter der Haube 32 des dargestellten Fahrzeuges eine erfindungsgemäße Abgasanlage angeordnet. Die Abgasanlage besteht aus dem Abgaskrümmer 20, dem Abgasturbolader 22, dem Schalldämpfer 2 und dem Auspuffrohr 26. Das Endrohr 74 des Schalldämpfers 2 ist lösbar mittels der Rohrschelle 48 mit dem Auspuffrohr 26 verbunden. Das Auspuffrohr 26 führt zur Hinterachse 46 des Fahrzeuges, wobei die Abgase nach dem Fahrzeug ins Freie geleitet werden. An der Vorderseite des Fahrzeuges erkennt man den Frontgrill 40 und anschliessend an die Haube 32 die Armaturenwand 34 des dargestellten Landfahrzeuges. Der Abgaskrümmer 20 ist auf an sich bekannte Weise mit dem nicht dargestellten Motor verbunden. Man erkennt, daß im unteren Bereich des Fahrzeuges die Bodenfreiheit des Fahrzeuges durch keinen Schalldämpfer beschränkt ist.

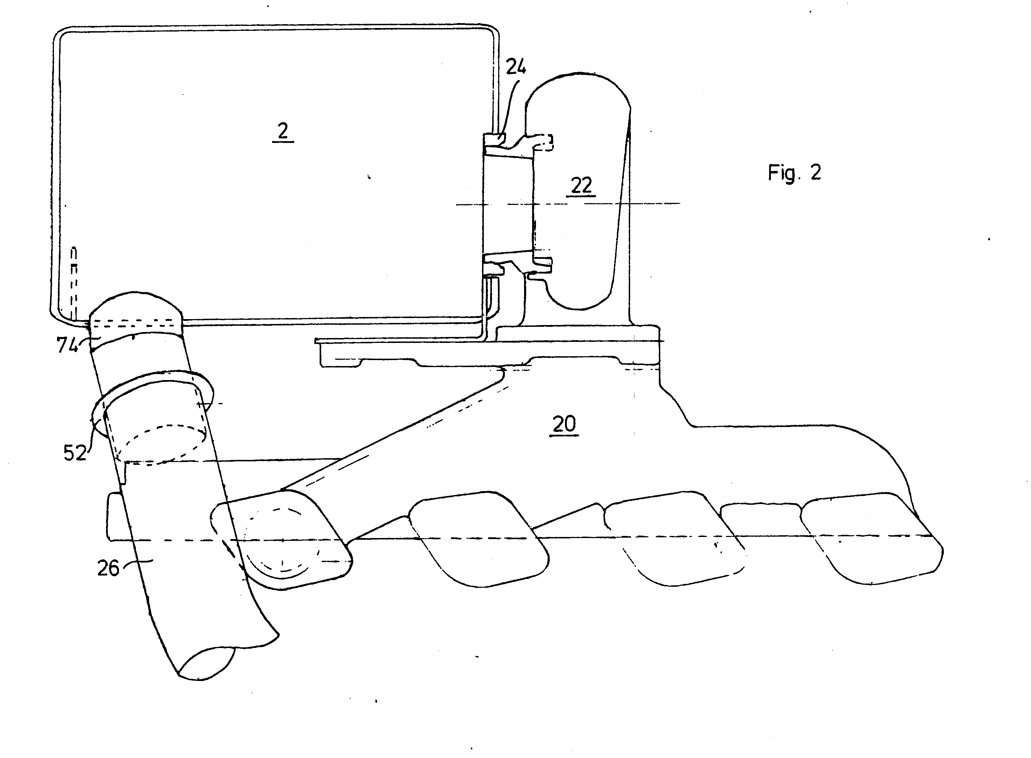

In Figur 2 ist die in Figur 1 dargestellte Abgasanlage in vergrößertem Maßstab dargestellt. Der Abgaskrümmer 20 ist über den Abgasturbolader 22 mit dem Schalldämpfer 2 verbunden. Der Abgasturbolader 22 ist mittels des rohrförmigen Flansches 24

- 5 -

mit dem Schalldämpfer 2 verbunden. Im unteren linken Bereich des Schalldämpfers 2 führt das Endrohr 74 nach außen. Das trichterförmige Ende 52 des Auspuffrohres 26 ist über das Endrohr 74 gestülpt, wobei über dieses Ende 52 des Auspuffrohres 26 die in Figur 1 dargestellte Rohrschelle 48 befestigt wird. Hierdurch ist eine lösbare sichere Verbindung des Auspuffrohres 26 mit dem Endrohr 74 gewährleistet. Das Endrohr 74 des Schalldämpfers verläuft nach hinten geknickt.

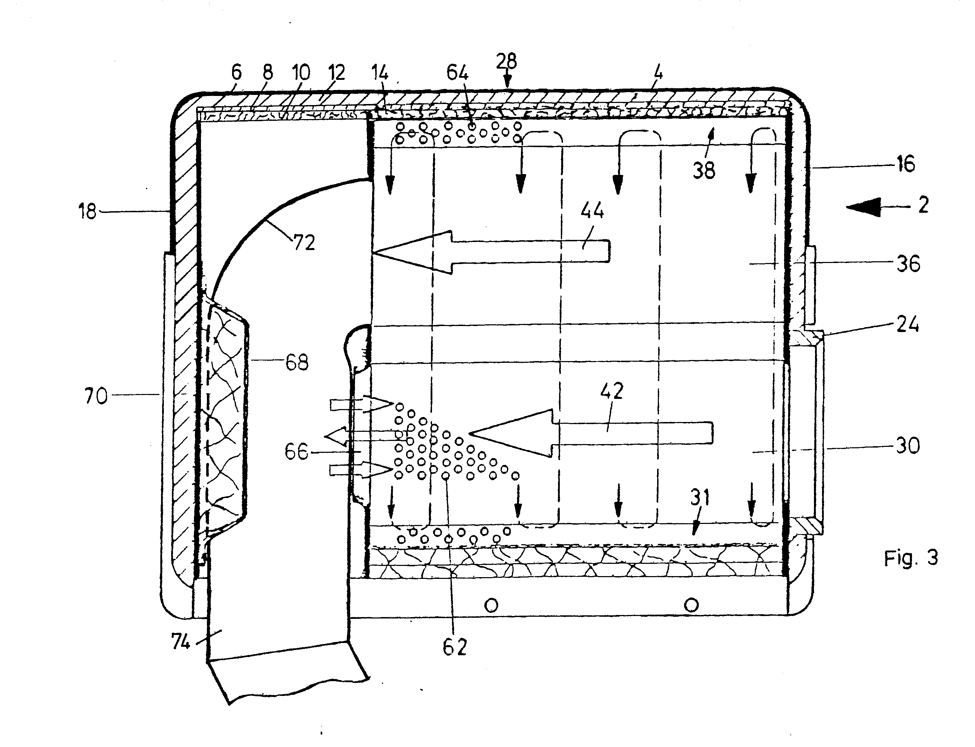

In Figur 3 ist ein Längsschnitt des in Figur 1 und Figur 2 dargestellten Schalldämpfers gezeigt. Der Schalldämpfer 2 besteht aus dem rohrförmigen Gehäuse 4, das einen nierenförmigen Gehäusemantel aufweist, der aus einer äußeren Wand 6, einer mittleren Wand 8 und einer inneren Wand 10 besteht. Zwischen der äußeren Wand 6 und der mittleren Wand 8 ist wärmeisolierendes Material 12 vorgesehen, so daß die Wärmeabstrahlung des Schalldämpfers auf einfache Weise herabgesetzt werden kann. Zwischen der mittleren Wand 8 und der inneren Wand 10 des Gehäuses 4 befindet sich schallschluckendes Absorptionsmaterial 14. Die innere Wand 10, die ebenfalls ein rohrförmiges Gehäuse bildet, ist über einen rechten Deckel 16 und einen linken Deckel 18 mit den Wänden 8 und 6 verbunden, so daß der Abstand zwischen den einzelnen Wänden 6, 8 und 10 konstant gehalten werden kann. Das Gehäuse 4 kann aus zwei Schalen gebildet sein, die stirnseitig verbunden sind. Im rechten Deckel 16 ist ein rohrförmiger Flansch 24 vorgesehen, der direkt an den in Figur 2 dargestellten Abgasturbolader 22

einer Verbrennungskraftmaschine angeschlossen werden kann. Der Schalldämpfer 2 ist mit einem Absorptionsteil 28 versehen.

An den Flansch 24 schließt sich ein Einlaßstutzen 30 an, der über seine gesamte Länge mit einem Längsschlitz 31 ausgerüstet ist, so daß die innere Kammer des Einlaßstutzens über den Längsschlitz 31 mit zwei getrennt verlaufenden Strömungskanälen verbunden ist. Die Strömungskanäle stehen über einen im Auslaßstutzen 36 vorgesehenen Längsschlitz 38 mit dem Innenraum des Auslaßstutzens 36 in Verbindung. Die Gasströmung ist in Figur 3 durch Pfeile 42 und 44 angegeben. Der Einlaßstutzen 30 verläuft parallel zum Auslaßstutzen 36. Hierdurch ist es möglich, die Einlaß- und Auslaßstutzen 30 und 36 auf einfache Weise herzustellen.

Der innere Wandteil des Einlaßstutzens 30 ist mit zahlreichen, einen gleichmäßigen Abstand untereinander aufweisenden Bohrungen 62 versehen, während beim Auslaßstutzen 36 die äußere Wand teilweise mit zahlreichen, ebenfalls einen gleichmäßigen Abstand untereinander aufweisenden Bohrungen 64 versehen ist. Durch die perforierte Ausbildung der inneren Wandteile des Einlaßstutzens 30 erhält man eine sehr gute Schallabsorption bereits im Einlaßstutzen 30.

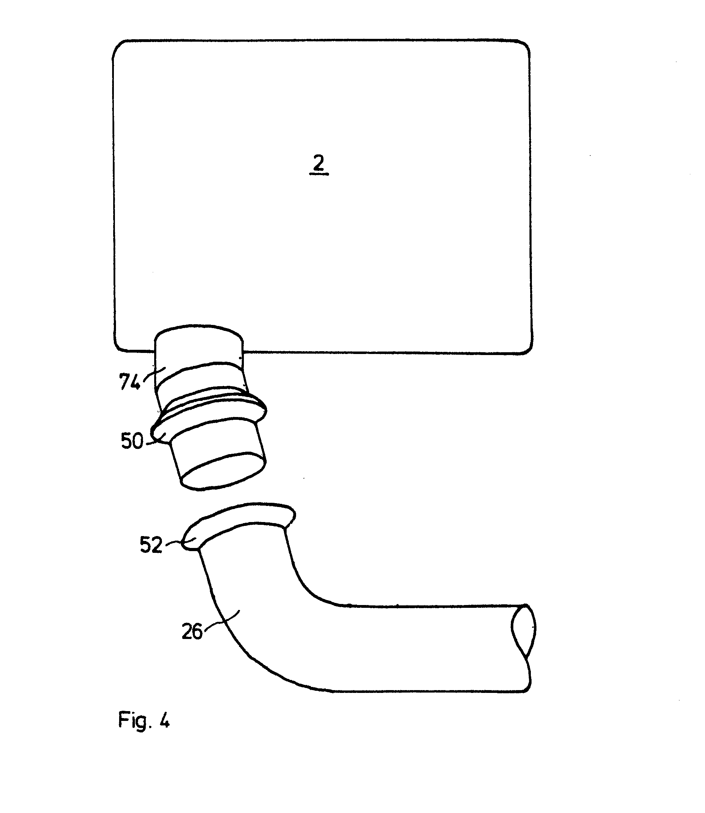

Das innere Ende des Einlaßstutzens 30 ist mit einer Öffnung 66 versehen, über die das Gas austreten kann und gegen ein Lochblech 68 trifft, das mit Abstand zum Deckel 18 angeordnet und auf diesem befestigt ist, so daß zwischen dem Deckel 18 und dem Lochblech 68 Absorptionsmaterial 70 aufgenommen werden kann. Hierdurch wird eine zusätzliche Absorption des durch die Öffnung 66 strömenden Gases erzielt, das von dem Lochblech 68 reflektiert wird und dann über den Einlaßstutzen 30 und den Längsschlitz 31 in die Strömungskanäle gelangt. Der Auslaßstutzen 36 ist an seinem inneren Ende im Gehäuse 4 über einen Rohrkrümmer 72 an das Endrohr 74 angeschlossen, dessen Verbindung mit einem Auspuffrohr anhand Figur 4 näher erläutert wird. Ergänzend wird zur Beschreibung des Schalldämpfers auf den aus der DE-OS 29 30 775 bekannten Schalldämpfer hingewiesen.

Figur 4 zeigt eine Ansicht des Schalldämpfers 2 und des Auspuffrohres 26, das abgebrochen dargestellt ist. Das Auspuffrohr 26 besitzt das trichterförmige Ende 52. Das Endrohr 74 des Schalldämpfers 2 verläuft nach hinten geknickt. In seinem unteren Bereich weist es einen ringförmigen Wulst 50 auf. Schiebt man das Auspuffrohr 26 mit seinem trichterförmigen Ende 52 über das Endrohr 74 des Schalldämpfers 2, so liegt es an dem ringförmigen Wulst 50 des Endrohres 74 an. In dieser Stellung kann über den ringförmigen Wulst 50 und das trichterförmige Ende 52 eine Rohrschelle befestigt werden.

Bezugszeichenliste

2 Schalldämpfer

4 Rohrförmiges Gehäuse

6 Äußere Wand

8 Mittlere Wand

10 Innere Wand

12 Wärmeisolierendes Material

14 Absorptionsmaterial

16 Deckel

18 Deckel

20 Abgaskrümmer

22 Abgasturbolader

24 Flansch

26 Auspuffrohr

28 Absorptionsteil

30 Einlaßstutzen

31 Längsschlitz

32 Haube

34 Armaturenwand

36 Auslaßstutzen

38 Längsschlitz

40 Frontgrill

42 Pfeil

44 Pfeil

46 Hinterachse

48 Rohrschelle

50 Ringförmiger Wulst

52 Trichterförmiges Rohrende

62 Bohrungen

64 Bohrungen

66 Öffnung

68 Lochblech

70 Absorptionsmaterial
72 Rohrkrümmer
74 Endrohr

Case 8233

Ansprüche

1. Abgasanlage für Kraftfahrzeuge, insbesondere für Landfahrzeuge, mit einem Abgaskrümmer (20), einem unter der Haube (32) des Fahrzeuges anbringbaren Schalldämpfer (2) und einem Auspuffrohr (26), wobei der Schalldämpfer (2) ein rohrförmiges Gehäuse (4), einen dazu im wesentlichen parallel-achsigen, in dieses hineinreichenden Einlaßstutzen (30) und einen zum Einlaßstutzen (30) parallel-achsigen Auslaßstutzen (36) aufweist, dadurch gekennzeichnet, daß der Auslaßstutzen (36) des Schalldämpfers (2) an seinem inneren Ende im Gehäuse (4) über einen ·Rohrkrümmer (72) an ein Endrohr (74) angeschlossen ist, das nach unten weist und mit dem nach hinten weisenden Auspuffrohr (26) lösbar verbunden ist.

2. Abgasanlage für Kraftfahrzeuge nach Anspruch 1, dadurch gekennzeichnet, daß das Endrohr (74) des Schalldämpfers (2) nach hinten geknickt verläuft.

3. Abgasanlage für Kraftfahrzeuge nach Anspruch 1 oder 2, dadurch gekennzeichnet, daß das Endrohr (74) des Schalldämpfers (2) einen ringförmigen Wulst (50) aufweist, an dem das trichterförmige Ende (52) des Auspuffrohres (26) anliegt.

4. Abgasanlage für Kraftfahrzeuge nach Anspruch 3, dadurch gekennzeichnet, daß über dem ringförmigen Wulst (50) des Schalldämpfers (2) und dem trichterförmigen Ende (52) des
Auspuffrohres (26) eine Rohrschelle (48) angeordnet
ist.

5. Abgasanlage für Kraftfahrzeuge nach mindestens
einem der vorherigen Ansprüche,
dadurch gekennzeichnet,
daß der Schalldämpfer (2) mittels eines an dem Einlaßstutzen (30) angeordneten Flansches (24) mit einem
Abgasturbolader (22) verbunden ist.

Fig. 1

Fig. 2

24

22

2

20

74

52

26

Fig. 3

3/4

0073270

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 116 803 (BUCHWALD) * Spalte 1, Zeilen 56-72; Figuren 1-4 * | 1 | F 01 N 7/08 B 60 K 13/04 |
| A | FR-A-2 397 522 (MASSEY-FERGUSON) * Seite 4, Zeilen 26-30; Figuren 1,3 * | 1 | |
| A | US-A-3 106 984 (CARTER) * Spalte 3, Zeile 31 - Spalte 4, Zeile 16; Figuren 6-8 * | 3,4 | |

**RECHERCHIERTE SACHGEBIETE (Int. Cl. ³)**

F 01 N
B 60 K

Der vorliegende Recherchenbericht wurde für alle Patentansprüche erstellt.

| Recherchenort DEN HAAG | Abschlußdatum der Recherche 04-05-1982 | Prüfer HAKHVERDI M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503. 03.82